# EUROPEAN PATENT SPECIFICATION

(11) **EP 3 145 804 B1**
(45) Date of publication and mention of the grant of the patent: **01.05.2019**
(21) Application number: 14892843.5
(22) Date of filing: 22.05.2014
(51) Int. Cl.: B63B 1/12, B63B 15/00, B63B 43/02, B63B 3/06, B63B 41/00, B63J 3/00

(54) **UNMANNED SURFACE VEHICLE**
UNBEMANNTES LANDFAHRZEUG
VÉHICULE DE SURFACE SANS PILOTE

(43) Date of publication of application: 29.03.2017
(73) Proprietor: SAAB AB, 581 88 Linköping (SE)
(72) Inventor: RYDELL, Anders, SE-582 12 linköping (SE)
(74) Representative: Nobeli Business Support AB
(86) International application number: PCT/SE2014/000066
(87) International publication number: WO 2015/178807

(56) References cited:
- WO-A1-87/02320
- WO-A1-87/02320
- WO-A1-2005/012079
- WO-A2-2010/098726
- DE-A1- 19 825 930
- FR-A1- 2 689 482
- US-A1- 2003 121 462
- US-A1- 2003 121 462
- US-A1- 2007 157 864
- US-A1- 2010 065 104
- US-A1- 2014 116 311
- US-B1- 6 394 019
- US-B1- 6 789 489

## Description

### TECHNICAL FIELD

The present invention describes a surface vehicle comprising a keel-mast arrangement where at least one keel is arranged to at least one mast to form the keel-mast arrangement and that the keel-mast arrangement is movably arranged to a multihull structure. The invention further describes a method to provide a capsize safe surface vehicle comprising a multihull structure and a keel-mast arrangement.

### BACKGROUND ART

The need of unmanned vehicles for different missions and purposes are rapidly increasing. It is today well known to use unmanned aerial vehicle and unmanned ground vehicles for different security and military missions. Currently unmanned surface vehicles, USV, have mainly been used to collect information with relation to oceanography. One of the commonly used technologies for unmanned surface vehicle is the wave glider principle. A wave glider, as its name indicates, is a vehicle that floats on the surface and harness wave energy to propel the vehicle. Benefits of the wave glider principle are that surface vehicles utilizing the wave glider principle usually have a low above the surface signature and thus a limited surface exposed to the wind making the vehicle relatively capsize safe. Vehicles with the wave glider principle to propel the vehicle are only possible to use where speed is of low or no importance. The speed of the vehicle is so low so that commercial available unmanned surface vehicles utilizing wave energy to propel the vehicle are known to have problems with seaweed accretion.

It is known that surface vehicle could be constructed in different ways to avoid capsize or to reduce disturbances of the surface vehicle in strong wind. The invention published in patent document US 6,394,019 B1 discloses a watercraft with anti-capsizing flotation members and rotating crew carrier for maintaining safe craft operation under hazardous water conditions.

The invention as disclosed in 6,394,019 B1 is a watercraft for crew transportation in hazardous water conditions. The patent document does not disclose any sailing means or means or methods to modify the watercraft into an unmanned surface vehicle.

It is also known that wind propelled surface vehicle could be constructed so that a mast and keel could move to some degree to make the hull more stable. The hull is thus less affected by the wind acting on the sail to propel the surface vehicle. The invention described in patent document US 5,908,005 A discloses a yacht with a mast mechanically connected to a keel via a bearing to keep the hull substantially horizontal with respect to surrounding flat water.

A problem with the solution described in US 5,908,005 A is that the hull is only kept horizontal for a limited amount of force to the sail (tilt of the mast), if the mast and keel arrangement are forced, by the wind, to its limits the hull of the boat would overturn and the yacht will capsize.

An unmanned surface vehicle having a keel-mast arrangement movably arranged relative to its multi hull structure is disclosed in US2014116311A1. The multi hull structure comprises a first and second floats connected by a truss structure. The keel-mast arrangement is rotatable connected to the truss structure via a longitudinal member. There is no disclosure about a tubular sleeve pivot-able supported therein.

This solution suffers from the same limitations as the one disclosed in US 5,908,005 A.

Accordingly, it is an object of the invention to provide a reliable and improved unmanned surface vehicle and a method for an unmanned surface vehicle.

Other problems solved by the invention are described in the detailed description.

### SUMMARY OF THE INVENTION

One object of the new invention is to eliminate drawbacks associated with the solutions known in the prior art.

Another object is to provide a wind propelled autonomous capsize safe surface vehicle.

The new invention describes a surface vehicle comprising a keel-mast arrangement where at least one keel is arranged to at least one mast to form the keel-mast arrangement and that the keel-mast arrangement is movably arranged to a multihull structure where the keel-mast arrangement is arranged with a rotating joint to the multihull structure, where the multi hull structure have at least one opening for the keel-mast arrangement to pass through, so that the multihull structure and the keel-mast arrangement are freely rotatable around an axis formed by a bow-stern axis.

Furthermore the improved surface vehicle according to the invention discloses;
that the multihull structure comprises four elongated floats arranged, by holding means, so that a first float and a second float are arranged to form a first elongated hull and a third float and a fourth float are arranged to form a second elongated hull and that the keel-mast arrangement is arranged between the first hull and the second hull.
that the first float and the third float are arranged to the first holding means and that the second float and the fourth float are arranged to the second holding means.
that the elongated floats are symmetrical in the elongated floats bow-stern axis.
that rudders are arranged to the stern of the first hull and the stern of the second hull.
that rudders are symmetrically arranged, to the stern of the elongated floats, so that substantially half the rudder is positioned above the bow-stern axis and half of the rudder is positioned below the bow-stern axis.
that the rotating joint comprises a tubular sleeve pivotally supported by an elongated member connecting the first holding means to the second holding means.
that the rotating joint between the keel-mast arrangement and the multihull structure comprises a slip ring connector for electrical connection between the keel-mast arrangement and the multihull structure.
that at least one wing is arranged on the mast as a sail.
that at least one solar panel is arranged to the wing.
that the keel comprises of two lateral undulating members.
that a lateral wing is arranged to the mast by a boom where the lateral wing comprises at least one aileron.

The invention further describes a method to provide a capsize safe surface vehicle comprising a multihull structure and a keel-mast arrangement where at least one keel is arranged to at least one mast to form the keel-mast arrangement and that the keel-mast arrangement is rotatable arranged to the multihull structure so that the multihull structure could freely rotate around the bow-stern axis to keep the mast substantially above the surface and the keel substantially below the surface when the surface vehicle is in use.

Furthermore the method to provide a capsize safe surface vehicle according to the invention discloses;
that the keel-mast arrangement is rotatable arranged to the multihull structure by an rotating joint, where the rotating joint comprises a tubular sleeve pivotally supported by an elongated member.
that the multihull structure is symmetrical so that the multihull structure could revolve, around the bow-stern axis, where the multi hull structure comprises the elongated member and that the elongated member rotates inside the sleeve, of the joint, while the keel-mast arrangement is substantially vertical.

### BRIEF DESCRIPTION OF THE DRAWINGS

The invention will be described in greater detail below by way of illustration of embodiments and with reference to the attached drawings, in which:
Fig. 1 shows a view from the side of an unmanned surface vehicle in accordance with the present invention.
Fig. 2 shows a view from the aft of an unmanned surface vehicle in accordance with the present invention.
Fig. 3 shows a view of the rotating connection between the keel-mast arrangement and the multihull structure of an unmanned surface vehicle in accordance with the present invention.
Fig. 4 shows a view from the side of an unmanned surface vehicle in accordance with the present invention.

### DETAILED DESCRIPTION

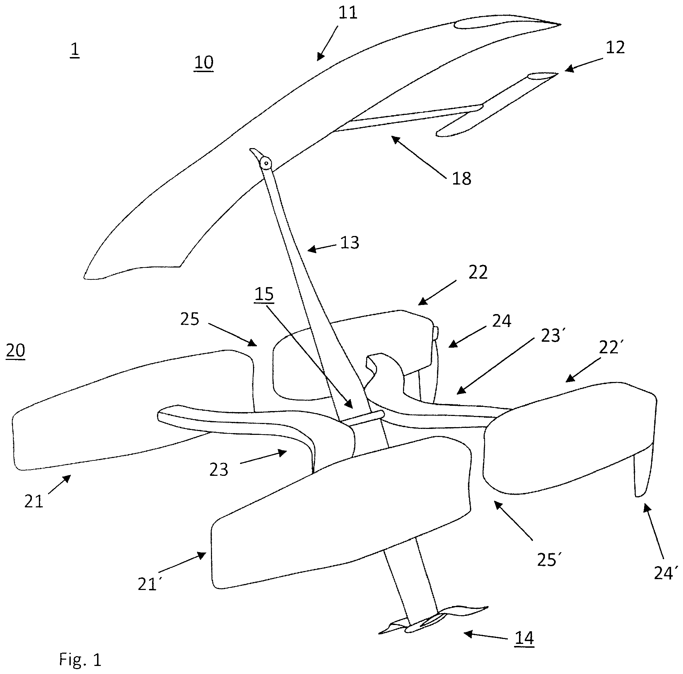

The unmanned surface vehicle 1, shown in figure 1, comprises a keel-mast arrangement 10 rotatable arranged to a multihull structure 20. The keel-mast arrangement 10 comprises at least one keel 14, or centerboard, arranged to at least one mast 13 to form the keel-mast arrangement 10. The lateral members are preferably shaped to reduce cavitation. In a preferable embodiment the lateral members are S shaped, wave formed or undulating. To the mast 13 a sail 11 could be arranged. A lateral wing 12 is fixedly arranged to the sail 11 and/or the mast 13 by a boom 18 or other arrangement. The arrangement comprising the lateral wing 12, boom 18, and sail 11 serves as a passive control system to keep a defined angle of attack of the sail 11 towards the changing wind. The lateral wing 12 is preferably arranged with at least one moveable aileron, fin and/or rudder or other control surface. By moving the aileron, by a servo or other actuator, the angle of attack of the lateral wing 12 and thus the sail 11 could be altered and controlled. For the unmanned surface vehicle 1 shown in figure 1 the sail 11 is a wing. The multihull structure 20 comprises four elongated floats 21, 21', 22, 22' arranged, by holding means 23, 23', so that a first float 21 and a second float 22 are arranged to form a first elongated hull 21, 22 and a third float 21' and a fourth float 22' are arranged to form a second elongated hull 21', 22'. A first rudder 24 is arranged on the first elongated hulls second float 22, i.e. the stern of the first elongated hull. A second rudder 24' is arranged on the second elongated hulls fourth float 22', i.e. the stern of the first elongated hull. The keel-mast arrangement 10 is arranged with a rotating joint 15 between the first hull, where the first hull comprises the first float 21 and a second float 22, and the second hull, where the second hull comprises the third float 21' and a fourth float 22'. The keel-mast arrangement 10 is thus rotatable arranged, by rotating joint 15, to the multihull structure 20 so that the multihull structure 20 could freely rotate so that the mast 13, at least the sail 11 part of the mast, is above the surface of the surrounding water and that the keel 14 is below the surface of the surrounding water and that the keel-mast arrangement 10 is substantially vertically oriented. The rotating joint could include a slip ring connector to electrically connect the keel-mast arrangement 10 to the multi hull structure 20. The first float 21 is arranged to the second float 22 by the first holding means 23 and the third float 21' is arranged to the fourth float 22' by the second holding means 23'. In a preferred embodiment solar panels are arranged on the wing 10 to provide electrical power to the unmanned surface vehicle 1. Furthermore the rotating joint 15 could include a generator to provide electrical power to the unmanned surface vehicle 1. Electrical power could be used on the unmanned surface vehicle to power a guidance, navigator and/or control system for the unmanned surface vehicle. Electrical power may also be needed to control the servos or motors for the rudders 24, 24' and the aileron on the lateral wing 12. Electrical power could also be used to power sensors, measurements instruments or other scientific instruments and for receiving and sending information to and from the unmanned surface vehicle.

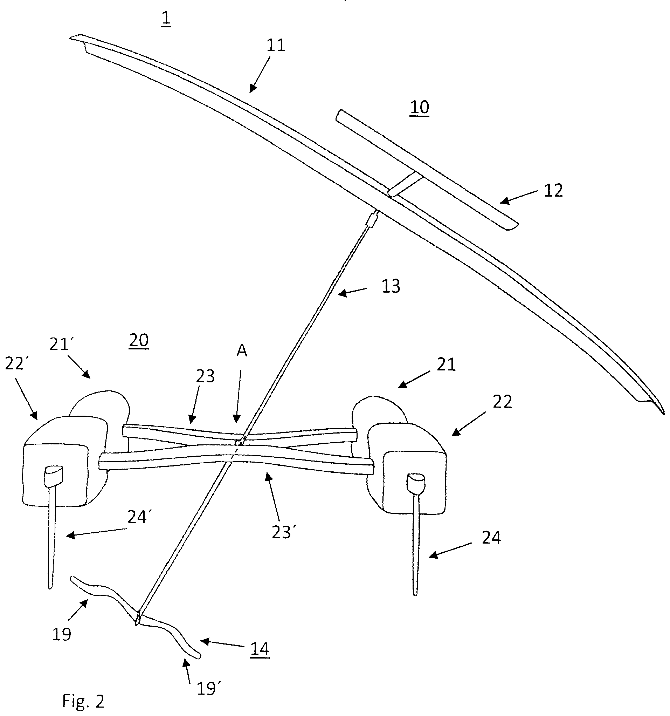

Figure 2 shows the unmanned surface vehicle 1 from the aft or stern. The keel 14 is preferably T-shaped with two lateral members 19, 19' principally orthogonally arranged to the mast 13. The rudders 24, 24' are shown in a first embodiment. In the shown figure the rudders are arranged to turn. In a second preferred embodiment, not shown, the rudders 24, 24' are symmetrically vertically arranged in the elongated floats 22, 22', 23, 23' bow-stern axis A vertical extension. In figure 2 the bow-stern axis A is indicated.

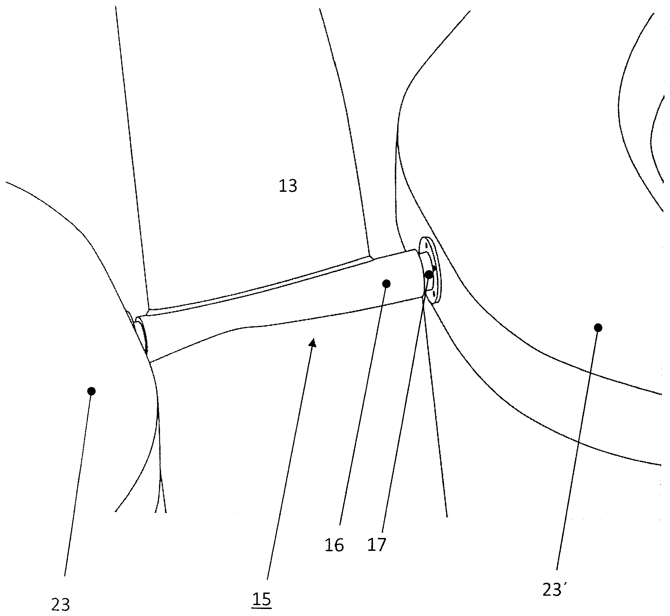

Figure 3 shows a close-up of the rotating joint 15 arranged to the first holding means 23 and the second holding means 23'. The first holding means 23 are fixedly arranged to the second holding means 23'. The mast 13, of the keel-mast arrangement 10, are preferably arranged to be rotatable movable around an axis connecting the first holding means 23 to the second holding means 23'. The mast 13 is arranged to a tubular sleeve 16 pivotally supported by an elongated member 17 where the elongated member 17 connects the first holding means 23 to the second holding means 23'. The rotating joint 15 further comprises a machine element to reduce the friction, such as a bearing.

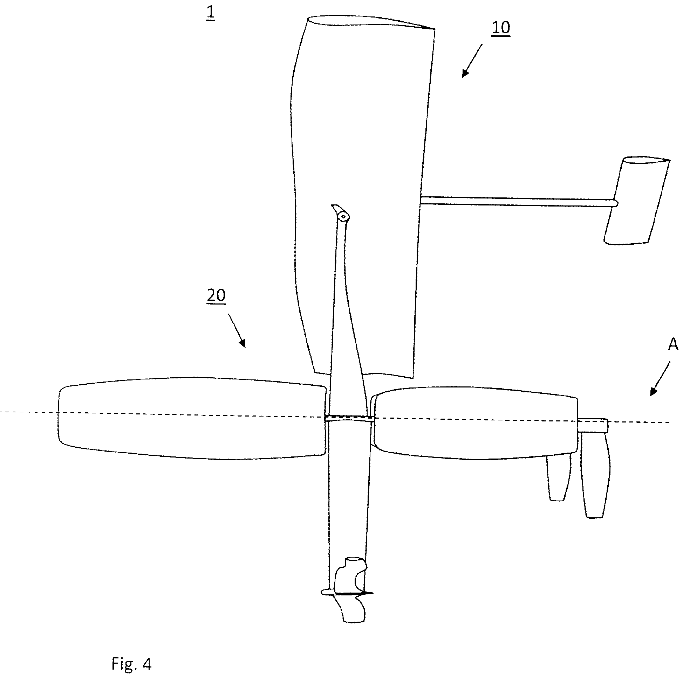

Figure 4 shows a side view of the unmanned surface vehicle 1. The bow-stern axis A is substantially the symmetrical axis of the multi hull structure 20. The multi hull structure 20 is symmetrical turnable around the bow-stern axis A. The bow-stern axis A substantially coincide with an axis axially going through the center of the elongated member 17, where the elongated member 17 is connecting the first holding means 23 to the second holding means 23'

The unmanned surface vehicles commonly used today utilize the wave glider principle. A wave glider comprises a floating body, comprising a hull, and an arrangement for generating energy from the wave and/or from solar panels. To keep the body of the wave glider in a horizontal position and to harvest the wave energy a swimmer, or movable keel, is mounted to the hull of the wave gliders body. The swimmer could be arranged to change position so that the swimmer is moved to a lover position in operation and to a position close the body of the wave glider when the wave glider is not in use. The body of the wave glider, when positioned in water, has a limited surface above the water level to reduce the wind load on the wave gliders body. Due to the low profile of the wave glider the wind does only have a limited effect on the wave glider making the wave glider resistant to strong wind. The propulsion of the wave glider is by means located under the water level. Commonly the propulsion speed of the wave glider is low and/or limited.

Unmanned surface vehicles with higher propulsion speed are also available. Unmanned surface vehicles with higher propulsion speed commonly utilize a combustion engine or other engine dependable on fuel. The wind provides energy to propel a surface vehicle with high speed. A commonly used surface vehicle that is able to travel with high speed by wind propulsion is the catamaran. The catamaran is known to be a light weight and fast surface vehicle. To safely sail with a catamaran there is a need of constant and incessant control of the sails by the yachtman and/or sailor to keep the catamaran from capsizing. A catamaran of traditional design is thus not suitable for unmanned surface vehicles. By providing a rotatable keel-mast arrangement 10 to a surface vehicle of the catamaran type it is possible to achieve an unmanned surface vehicle that is capsize safe. The keel-mast arrangement 10 is rotatable arranged to the multihull structure 20. In high wind, when the wind energy is acting on the sail 11, the keel-mast arrangement 10 could freely move in correspondence to the winds direction. If the waves/wind is so strong that the sail 11, and thus the keel-mast arrangement 10, is forced to the surface of the surrounding water the contour of the sail 11 is reduced and the force on the sail 11 is also reduced. If the sail 11 is forced to the surface of the surrounding water the keel-mast arrangement 10 is substantially horizontal. When the wind/waves is reduced, due to change in weather conditions, the weight and momentum the keel 14 puts on the mast 13, and thus the sail 11, provides that the sail 11 again is forced to a position above the surface of the water in an upright position. In the upright position the keel-mast arrangement 10 is substantially vertical. Even if the waves/wind acting on the sail 11 forces the keel-mast arrangement into the water surrounding the unmanned surface vehicle 1 the opening 25, 25' let the keel-mast arrangement 10 to move without moving or in another way touch or contact the multihull structure 20. And if the waves/wind acts on the multihull structure 20, the multi hull structure 20 could rotate around the rotating joint 15 and make a 180 degree turn since the opening 25, 25' of the multi hull structure 20 lets the keel-mast arrangement 10 to pass between the openings 25, 25' when the multi-hull structure 20 revolve.

The multi-hull structure 20 is symmetrical with regards to the bow-stern axis A. The rudders 24, 24' are preferably arranged to be extending symmetrically above and below the bow-stern axis A. The rudders 24, 24' could also be arranged to turn, by gravity or other means, to always be positioned beneath the surface of the water and in a substantially vertical orientation. The multi-hull structure could thus be revolved around the bow-stern axis A and the axis formed by the elongated member 17, where the elongated member 17 connects the first holding means 23 to the second holding means 23'. Surrounding the elongated member 17 is a tubular sleeve 16 pivotally supported by the elongated member 17. The tubular sleeve is arranged to or integrated with the mast 13. The multi-hull structure 20 is arranged with a sensor to determine the orientation of the multi-hull structure 20. Depending upon the orientation of the multi-hull structure 20 the rudders 24, 24' control direction are interchanged.

Sailing of the unmanned surface vehicle 1 is by traditional methods including beating, reaching and running all controlled by the unmanned surface vehicles guidance, navigation and control unit or by a remote operator. Preferably a wind sensor is used on the unmanned surface vehicle 1 to determine wind direction and intensity. The wing 11, or other part of the unmanned surface vehicle 1 such as the keel 14, could be arranged with a device or technical solution to hinder the unmanned surface vehicle 1 to be lifted by an extremely strong wind or gust of wind. As an example the wing 11 could be arranged to flex or change direction when the wind act upon the wing 11 with a certain wind force.

### ALTERNATIVE EMBODIMENTS

The invention is not limited to the shown embodiments. The invention could be varied regarding to the number of elements, size, material, and form factor within the scope of the patent claims.

It is obvious that the presented new invention could be used for all kinds of navigation systems, for all types of vehicles and ships, including airships, spaceships, and sea ships and on land vehicles.

## Claims

1. Unmanned surface vehicle (1) comprising a keel-mast arrangement (10) where at least one keel (14) is arranged to at least one mast (13) to form the keel-mast arrangement (10) and that the keel-mast arrangement (10) is movably arranged to a multihull structure (20) of said unmanned surface vehicle, wherein the keel-mast arrangement (10) is arranged with a rotating joint (15) to the multihull structure (20) between a first elongated hull (21, 22) and a second elongated hull (21', 22'), where the multi hull structure (20) comprises four elongated floats (21, 21',22, 22') arranged by holding means (23, 23') of said unmanned surface vehicle, so that a first float (21) and a second float (22) form said first elongated hull (21,22) extending along a bow axis (A) of said unmanned surface vehicle (1) and a third float (21') and a fourth float (22') form said second elongated hull (21', 22') extending along said bow axis (A) of said unmanned surface vehicle (1), wherein the first float (21) and the third float (21') are arranged to the first holding means (23) and that the second float (22) and the fourth float (22') are arranged to the second holding means (23'), said multi hull structure (20) having at least one opening (25, 25') for the keel-mast arrangement (10) to pass through, so that the multihull structure (20) and the keel-mast arrangement (10) are freely rotatable around an axis formed by said bow-stern axis (A), wherein the rotating joint (15) comprises a tubular sleeve (16) pivotally supported by an elongated member (17) connecting the first holding means (23) to the second holding means (23').

2. Surface vehicle (1) according to claim 1 **characterized by** that the elongated floats (21), (21'), (22), (22') are symmetrical in the elongated floats (21), (21'), (22), (22') bow-stern axis (A).

3. Surface vehicle (1) according to claim 1 or 2 **characterized by** that rudders (24), (24') are arranged to the stern of the first hull and the stern of the second hull.

4. Surface vehicle (1) according to claim 3 **characterized by** that rudders (24), (24') are symmetrically arranged, to the stern of the elongated floats (22), (22'), so that substantially half the rudder (24), (24') is positioned above the bow-stern axis (A) and half of the rudder (24), (24') is positioned below the bow-stern axis (A).

5. Surface vehicle (1) according to any of the preceding claims **characterized by** that the rotating joint (15) between the keel-mast arrangement (10) and the multihull structure (20) comprises a slip ring connector for electrical connection between the keel-mast arrangement (10) and the multihull structure (20).

6. Surface vehicle (1) according to any of the preceding claims **characterized by** that at least one wing (11) is arranged on the mast (13) as a sail.

7. Surface vehicle (1) according to claim 6 **characterized by** that at least one solar panel is arranged to the wing (11).

8. Surface vehicle (1) according to any of the preceding claims **characterized by** that the keel (14) comprises of two lateral undulating members (19), (19').

9. Surface vehicle (1) according to any of the preceding claims **characterized by** that a lateral wing (12) is arranged to the mast (13) by a boom (18) where the lateral wing (12) comprises at least one aileron.

10. Method to provide a capsize safe unmanned surface vehicle (1) according to any of the preceding claims, said vehicle comprising a multihull structure (20) and a keel-mast arrangement (10) where at least one keel (14) is arranged to at least one mast (13) to form the keel-mast arrangement (10) wherein the keel-mast arrangement (10) is rotatable arranged to the multihull structure (20) so that the multihull structure (20) could freely rotate around the bow-stern axis (A) to keep the mast (13) substantially above the surface and the keel (14) substantially below the surface when the surface vehicle (1) is in use, and wherein the keel-mast arrangement (10) is rotatable arranged to the multihull structure (20) by a rotating joint (15), where the rotating joint (15) comprises a tubular sleeve (16) pivotally supported by an elongated member (17) and wherein the multihull structure (20) is symmetrical so that the multihull structure (20) could revolve, around the bow-stern axis (A), where the multi hull structure (20) comprises the elongated member (17) and that the elongated member (17) rotates inside the sleeve (16), of the joint (15), while the keel-mast arrangement (10) is substantially vertical.

## Patentansprüche

1. Unbemanntes Wasserfahrzeug (1), umfassend eine Kiel-Mast-Anordnung (10), bei der mindestens ein Kiel (14) an mindestens einem Mast (13) angeordnet ist, um die Kiel-Mast-Anordnung (10) zu bilden, und wobei die Kiel-Mast-Anordnung (10) beweglich an einer Mehrrumpfstruktur (20) des unbemannten Wasserfahrzeugs angeordnet ist, wobei die Kiel-Mast-Anordnung (10) mit einem Drehgelenk (15) an der Mehrrumpfstruktur (20) zwischen einem ersten länglichen Rumpf (21, 22) und einem zweiten länglichen Rumpf (21', 22') angeordnet ist, wo die Mehrrumpfstruktur (20) vier längliche Schwimmkörper (21, 21', 22, 22') umfasst, die mittels Haltemitteln (23, 23') des unbemannten Wasserfahrzeugs so angeordnet sind, dass ein erster Schwimmkörper (21) und ein zweiter Schwimmkörper (22) den ersten länglichen Rumpf (21, 22) bilden, der sich entlang einer Bugachse (A) des unbemannten Wasserfahrzeugs (1) erstreckt, und ein dritter Schwimmkörper (21') und ein vierter Schwimmkörper (22') den zweiten länglichen Rumpf (21', 22') bilden, der sich entlang der Bugachse (A) des unbemannten Wasserfahrzeugs (1) erstreckt, wobei der erste Schwimmkörper (21) und der dritte Schwimmkörper (21') an dem ersten Haltemittel (23) angeordnet sind und der zweite Schwimmkörper (22) und der vierte Schwimmkörper (22') an dem zweiten Haltemittel (23') angeordnet sind, wobei die Mehrrumpfstruktur (20) mindestens eine Öffnung (25, 25') aufweist, durch die die Kiel-Mast-Anordnung (10) hindurchgehen kann, sodass die Mehrrumpfstruktur (20) und die Kiel-Mast-Anordnung (10) frei um eine Achse drehbar sind, die durch die Bug-Heck-Achse (A) gebildet ist, wobei das Drehgelenk (15) eine röhrenförmige Hülse (16) umfasst, die gelenkig durch ein längliches Element (17) getragen wird, das das erste Haltemittel (23) mit dem zweiten Haltemittel (23') verbindet.

2. Wasserfahrzeug (1) nach Anspruch 1, **dadurch gekennzeichnet, dass** die länglichen Schwimmkörper (21), (21'), (22), (22') in der Bug-Heck-Achse (A) der länglichen Schwimmkörper (21), (21'), (22), (22') symmetrisch sind.

3. Wasserfahrzeug (1) nach Anspruch 1 oder 2, **dadurch gekennzeichnet, dass** Ruder (24), (24') an dem Heck des ersten Rumpfs und dem Heck des zweiten Rumpfs angeordnet sind.

4. Wasserfahrzeug (1) nach Anspruch 3, **dadurch gekennzeichnet, dass** die Ruder (24), (24') symmetrisch an dem Heck der länglichen Schwimmkörper (22), (22') angeordnet sind, sodass im Wesentlichen eine Hälfte des Ruders (24), (24') über der Bug-Heck-Achse (A) positioniert ist und eine andere Hälfte des Ruders (24), (24') unter der Bug-Heck-Achse (A) positioniert ist.

5. Wasserfahrzeug (1) nach einem der vorhergehenden Ansprüche, **dadurch gekennzeichnet, dass** das Drehgelenk (15) zwischen der Kiel-Mast-Anordnung (10) und der Mehrrumpfstruktur (20) einen Schleifringanschluss für eine elektrische Verbindung zwischen der Kiel-Mast-Anordnung (10) und der Mehrrumpfstruktur (20) umfasst.

6. Wasserfahrzeug (1) nach einem der vorhergehenden Ansprüche, **dadurch gekennzeichnet, dass** mindestens eine Tragfläche (11) an dem Mast (13) als ein Segel angeordnet ist.

7. Wasserfahrzeug (1) nach Anspruch 6, **dadurch gekennzeichnet, dass** mindestens ein Solarpanel an der Tragfläche (11) angeordnet ist.

8. Wasserfahrzeug (1) nach einem der vorhergehenden Ansprüche, **dadurch gekennzeichnet, dass** der Kiel (14) zwei schlängelnde Elemente (19), (19') umfasst.

9. Wasserfahrzeug (1) nach einem der vorhergehenden Ansprüche, **dadurch gekennzeichnet, dass** eine seitliche Tragfläche (12) durch einen Baum (18) an dem Mast (13) angeordnet ist, wobei die seitliche Tragfläche (12) mindestens ein Querruder umfasst.

10. Verfahren zum Bereitstellen eines kentersicheren unbemannten Wasserfahrzeugs (1) nach einem der vorhergehenden Ansprüche, wobei das Fahrzeug eine Mehrrumpfstruktur (20) und eine Kiel-Mast-Anordnung (10) umfasst, bei der mindestens ein Kiel (14) an mindestens einem Mast (13) angeordnet ist, um die Kiel-Mast-Anordnung (10) zu bilden, wobei die Kiel-Mast-Anordnung (10) drehbar an der Mehrrumpfstruktur (20) angeordnet ist, sodass sich die Mehrrumpfstruktur (20) frei um die Bug-Heck-Achse (A) drehen kann, um den Mast (13) im Wesentlichen über der Wasseroberfläche und den Kiel (14) im Wesentlichen unterhalb der Wasseroberfläche zu halten, wenn das Wasserfahrzeug (1) in Gebrauch ist, und wobei die Kiel-Mast-Anordnung (10) durch ein Drehgelenk (15) drehbar an der Mehrrumpfstruktur (20) angeordnet ist, wobei das Drehgelenk (15) eine röhrenförmige Hülse (16) umfasst, die gelenkig durch ein längliches Element (17) getragen wird, und wobei die Mehrrumpfstruktur (20) symmetrisch ist, sodass die Mehrrumpfstruktur (20) sich um die Bug-Heck-Achse (A) drehen kann, wobei die Mehrrumpfstruktur (20) das längliche Element (17) umfasst und das längliche Element (17) sich innerhalb der Hülse (16) des Gelenks (15) dreht, während die Kiel-Mast-Anordnung (10) im Wesentlichen vertikal ist.

## Revendications

1. Véhicule de surface sans pilote (1) comprenant un ensemble quille-mât (10), au moins une quille (14) étant agencée sur au moins un mât (13) pour former l'ensemble quille-mât (10) et l'ensemble quille-mât (10) étant agencé mobile sur une structure multicoque (20) dudit véhicule de surface sans pilote, l'ensemble quille-mât (10) présentant une articulation pivotante (15) par rapport à la structure multicoque (20) entre une première coque oblongue (21, 22) et une deuxième coque oblongue (21', 22'), ladite structure multicoque (20) comprenant quatre flotteurs oblongs (21, 21', 22, 22') assemblés par des moyens de retenue (23, 23') dudit véhicule de surface sans pilote, de manière qu'un premier flotteur (21) et un deuxième flotteur (22) forment ladite première coque oblongue (21, 22) s'étendant selon un axe de la proue (A) dudit véhicule de surface sans pilote (1), et de manière qu'un troisième flotteur (21') et un quatrième flotteur (22') forment ladite deuxième coque oblongue (21', 22') s'étendant selon ledit axe de la proue (A) dudit véhicule de surface sans pilote (1), lesdits premier flotteur (21) et troisième flotteur (21') étant agencés sur le premier moyen de retenue (23), et lesdits deuxième flotteur (22) et quatrième flotteur (22') étant agencés sur le deuxième moyen de retenue (23'), ladite structure multicoque (20) possédant au moins une ouverture (25, 25') destinée au passage de l'ensemble quille-mât (10), si bien que la structure multicoque (20) et l'ensemble quille-mât (10) sont librement pivotants sur un axe formé par ledit axe proue-poupe (A), ladite articulation pivotante (15) comprenant un manchon tubulaire (16) supporté pivotant par un élément allongé (17) reliant le premier moyen de retenue (23) au deuxième moyen de retenue (23').

2. Véhicule de surface (1) selon la revendication 1, **caractérisé en ce que** les flotteurs oblongs (21, 21', 22, 22') sont symétriques selon l'axe proue-poupe (A) des flotteurs oblongs (21, 21', 22, 22').

3. Véhicule de surface (1) selon la revendication 1 ou 2, **caractérisé en ce que** des safrans (24, 24') sont agencés sur la poupe de la première coque et sur la poupe de la deuxième coque.

4. Véhicule de surface (1) selon la revendication 3, **caractérisé en ce que** des safrans (24, 24') sont agencés symétriques sur la poupe des flotteurs oblongs (22, 22') afin qu'une moitié du safran (24, 24') soit sensiblement disposée au-dessus de l'axe proue-poupe (A) et qu'une moitié du safran (24, 24') soit sensiblement disposée en dessous de l'axe proue-poupe (A).

5. Véhicule de surface (1) selon l'une quelconque des revendications précédentes, **caractérisé en ce que** l'articulation pivotante (15) entre l'ensemble quille-mât (10) et la structure multicoque (20) comprend un connecteur à contact tournant assurant la connexion électrique entre l'ensemble quille-mât (10) et la structure multicoque (20).

6. Véhicule de surface (1) selon l'une quelconque des revendications précédentes, **caractérisé en ce qu'**au moins une aile (11) est agencée sur le mât (13) pour servir de voile.

7. Véhicule de surface (1) selon la revendication 6, **caractérisé en ce qu'**au moins un panneau solaire est agencé sur l'aile (11).

8. Véhicule de surface (1) selon l'une quelconque des revendications précédentes, **caractérisé en ce que** la quille (14) se compose de deux éléments ondulés latéraux (19, 19').

9. Véhicule de surface (1) selon l'une quelconque des revendications précédentes, **caractérisé en ce qu'**une aile latérale (12) est agencée sur le mât (13) au moyen d'une perche (18), ladite aile latérale (12) comprenant au moins un aileron.

10. Procédé de réalisation d'un véhicule de surface sans pilote (1) résistant au chavirage selon l'une quelconque des revendications précédentes, ledit véhicule comprenant une structure multicoque (20) et un ensemble quille-mât (10), au moins une quille (14) étant agencée sur au moins un mât (13) pour former l'ensemble quille-mât (10), ledit ensemble quille-mât (10) étant agencé pivotant sur la structure multicoque (20) de manière que la structure multicoque (20) pourrait être librement pivotante sur l'axe proue-poupe (A) pour maintenir le mât (13) sensiblement au-dessus de la surface et la quille (14) sensiblement en dessous de la surface lorsque le véhicule de surface (1) est en utilisation, ledit ensemble quille-mât (10) étant agencé pivotant sur la structure multicoque (20) au moyen d'une articulation pivotante (15), ladite articulation pivotante (15) comprenant un manchon tubulaire (16) supporté pivotant par un élément allongé (17) et ladite structure multicoque (20) étant symétrique de sorte que la structure multicoque (20) pourrait tourner autour de l'axe proue-poupe (A), ladite structure multicoque (20) comprenant l'élément allongé (17), et l'élément allongé (17) tournant à l'intérieur du manchon (16) de l'articulation (15) pendant que l'ensemble quille-mât (10) est sensiblement vertical.
